## Europäisches Patentamt

**European Patent Office**

**Office européen des brevets**

(19)

(11) Veröffentlichungsnummer: **0 018 597**

**A1**

(12) **EUROPÄISCHE PATENTANMELDUNG**

(21) Anmeldenummer: **80102208.8**

(22) Anmeldetag: **24.04.80**

(51) Int. Cl.³: **F 16 L 3/24**

(30) Priorität: **08.05.79 DE 2918530**

(43) Veröffentlichungstag der Anmeldung:
**12.11.80** Patentblatt **80.23**

(84) Benannte Vertragsstaaten:
**AT BE FR IT LU NL**

(71) Anmelder: THERMOVAL Fussbodenheizungen
Entwicklungs- und Forschungsgesellschaft m.b.H.
Storchengasse 1
A-1150 Wien(AT)

(72) Erfinder: Haugeneder, Hans, Ing.
Unterer Markt 8
A-3335 Weyer(AT)

(74) Vertreter: Skuhra, Udo, Dipl.-Ing.
Richard-Strauss-Strasse 9
D-8000 München 80(DE)

(54) **Halterung, insbesondere zur Verlegung und Befestigung von Rohren von Fussbodenheizungen auf Fussböden.**

(57) Die Halterung besthet aus mehreren Haltern (1), die an einem vorzugsweise leistenförmigen Trägerelement (2) lösbar befestigt werden. Jeder Halter (1) weist an einem Verbindungssteg (1c) einen nach unten verlaufenden Zapfen (9) auf, der nach der Befestigung des Halters (1) auf dem Trägerelement (2) in eine zugeordnete Öffnung des Trägerelements (2) eingreift.

*Fig.1*

EP 0 018 597 A1

- 1 -

Halterung, insbesondere zur Verlegung und Befestigung von
Rohren von Fußbodenheizungen auf Fußböden

Die Erfindung betifft eine Halterung, insbesondere zur
Verlegung und Befestigung von Rohren von Fußbodenheizungen
auf Fußböden, bestehend aus mehreren, auf ihrer Oberseite
ein Rohr aufnehmenden Haltern, die an einem Trägerelement
lösbar befestigt sind und sich seitlich des Trägerelements
erstreckende Schenkel aufweisen, welche das Trägerelement
klemmend umfassen.

Eine Halterung der eingangs genannten Art, die allerdings
nicht zur Halterung von Rohren von Fußbodenheizungen dient,
ist aus der DE-AS 11 04 008 bekannt. Die bekannte Halterung
hat zum Nachteil, daß sie aus mehreren Teilen besteht und
die mit der Halterung bezweckte Befestigung von Kabeln durch
den Einsatz von jeweils zwei Haltern erreicht wird. Nachteilig
ist außerdem die Gesamthöhe der bekannten Halterung, so daß sie nicht für die Verlegung von Rohren von Fußbodenheizungen
Anwendung finden kann.

Grundsätzlich sollen Halterungen für Rohre von Fußbodenheizungen eine sichere Befestigung der Rohre an den zugeordneten
Trägerelementen ermöglichen, eine leichte Montage und gegebenenfalls eine leichte Demontage der Halter gegenüber den
Trägerelementen ermöglichen. Ein weiteres Erfordernis derartiger Halterungen ist, daß nach der Montage der Halter auf
dem Trägerelement die Halter verschiebungssicher am Trägerelement angeordnet sind. Eine Halterung, die bei geringer
Klemmkraft eine verschiebungssichere Befestigung der Rohrhalter auf dem Trägerelement gewährleisten soll, ist aus
der DE-GMS 77 14 973 bekannt, jedoch sind bei derartigen
Halterungen immer noch relativ hohe Klemmkräfte erforderlich, um eine Verschiebung der Halter gegenüber den Trägerelementen im montierten Zustand ausschließen zu können.

Der Erfindung liegt demgegenüber die Aufgabe zugrunde, eine
Halterung für Rohre von Fußbodenheizungen zu schaffen, die
einfach aufgebaut ist und dennoch eine verschiebungssichere
Befestigung der Halter auf den Trägerelementen ermöglicht.

Diese Aufgabe wird erfindungsgemäß dadurch gelöst, daß jeder
Schenkel des Halters auf seiner dem Trägerelement gegenüberliegenden Fläche mit        in Längsrichtung zum Trägerelement verlaufenden Rastvorsprüngen versehen ist, die das
Trägerelement untergreifen und daß zwischen den beiden
Schenkeln ein in eine Öffnung des Trägerelements eingreifender Zapfen vorgesehen ist.

Die Erfindung schafft insbesondere eine Halterung, die für
herkömmliche Rohre von Fußbodenheizungen mit kreisrundem
Querschnitt, bevorzugt aber auch für Rohre mit ovalem
Querschnitt eingesetzt werden kann.

Die Ausbildung eines Zapfens an der Unterseite des Halters, der
in eine zugeordnete Öffnung des Trägerelements bei der Montage
des Halters auf das Trägerelement eingeschoben wird, gewährleistet mit Sicherheit eine verschiebungssichere Anordnung
der Halter auf dem zugeordneten Trägerelement, ohne daß
hohe Klemmkräfte erforderlich sind, die von den Schenkeln
der Halter gegenüber dem leistenförmigen Trägerelement ausgeübt werden müssen. Damit ist eine schnelle Montage und
gegebenenfalls auch eine leichte Demontage der Halter möglich, während die Halter im montierten Zustand fest auf dem
Trägerelement und verschiebungssicher sitzen.

Beim Einsatz der erfindungsgemäßen Halterung für ovale
Rohre wird eine feste Halterung der Rohre zwischen den
Haltelaschen der Halter gewährleistet, insbesondere werden
die ovalen Rohre -    in aufrecht stehender oder liegender
Weise- fest und weitgehend drehsicher zwischen den Haltelaschen der Halter eingeklemmt.

Nach einer bevorzugten Ausführungsform sind an der Oberseite
des Verbindungsstegs zwischen den beiden Schenkeln der
Halter Längsrippen vorgesehen, die einen vorbestimmten Abstand zueinander einhalten und zu einer sicheren Aufnahme
von ovalen Rohren beitragen.

Das Trägerelement ist mit Abstand zueinander einhaltenden
Öffnungen, vorzugsweise sich durch die Stärke des Trägerelements verlaufenden Öffnungen, versehen, wobei die Abstände zwischen den Öffnungen dem gewünschten oder nötigen
Abstand zwischen den Fußbodenheizungsrohren bei der Verlegung entsprechend gewählt sind.

Da die verschiebungssichere Aufnahme der Halter auf dem
Trägerelement ausschließlich durch den Eingriff zwischen
den an der Unterseite des Verbindungsstegs angeordneten Zapfen der Halter und den zugeordneten Öffnungen im Trägerelement erreicht wird, ist nur noch eine vergleichbar geringe
Klemmkraft zwischen den Schenkeln der Halter und dem Trägerelement erforderlich, um ein unbeabsichtigtes Abheben des
Halters gegenüber dem Trägerelement zu verhindern, gleichzeitig jedoch eine gewollte Demontage der Halter von dem
Trägerelement zu ermöglichen. Im Bedarfsfall kann es daher
ausreichen, daß anstelle der in Längsrichtung verlaufenden
Rastvorsprünge an den Schenkeln der Halter, die in Form einer
in Längsrichtung verlaufenden Rippe ausgebildet sein können, einzelne Rastvorsprünge vorgesehen werden, beispielsweise pro Schenkelnur zwei bis drei derartige Rastvorsprünge,
da die von ihnen ausgeübte Klemmkraft ausreichen kann, um
den Halter am Trägerelement sicher zu halten.

Im folgenden werden bevorzugte Ausführungsformen der Erfindung anhand der Zeichnung zur Erläuterung weiterer
Merkmale beschrieben. Es zeigen:

Fig. 1 eine Schnittansicht der Halterung entlang der Linie
I-I in Fig. 2, in welcher ein Halter auf ein Trägerelement aufgesetzt ist,

Fig. 2 eine Schnittansicht entlang der Linie II-II in Fig. 1,
ohne Trägerelement,

Fig. 3 eine Fig. 2 entsprechende Ansicht des Halters,

Fig. 4 eine Aufsicht auf das Trägerelement mit seinen Öffnungen,

Fig. 5 eine Schnittansicht durch den Halter und das Trägerelement entsprechend Fig. 1 zur Verdeutlichung einer
abgewandelten Ausführungsform des Trägerelements, und

Fig. 6 eine Fig. 2 entsprechende Ansicht des Halters, bei dem
im Gegensatz zu den rippenförmigen Rastvorsprüngen an
den Schenkeln nur jeweils zwei einzelne Rastvorsprünge
ausgebildet sind.

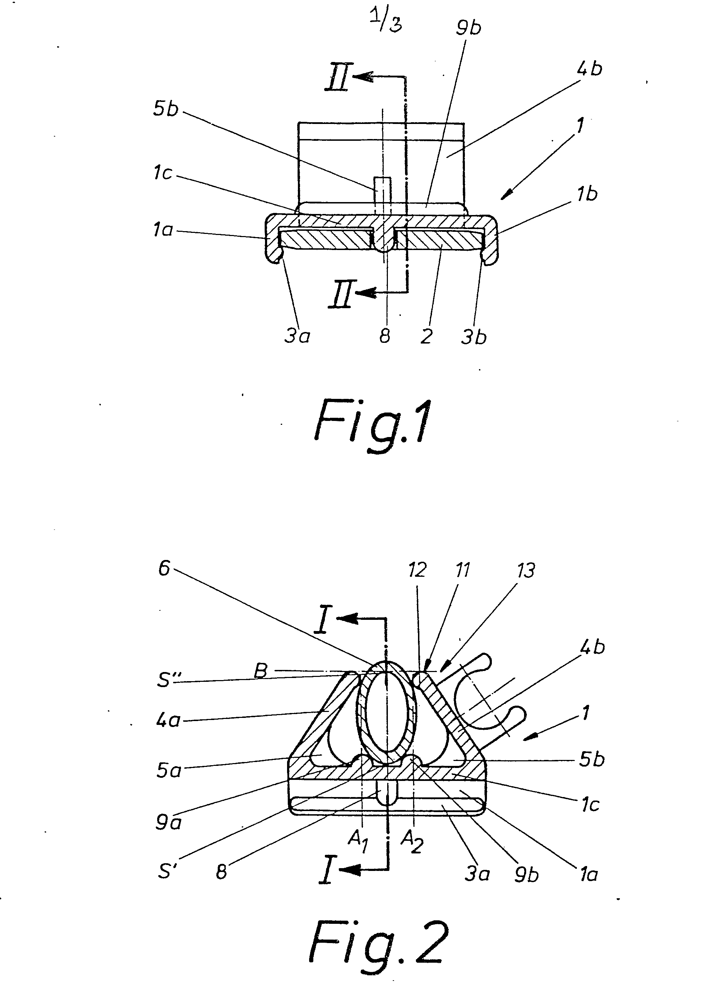

Unter Bezugnahme auf die Zeichnungen wird im folgenden eine
bevorzugte Ausführungsform der Halterung beschrieben. Fig. 1
zeigt eine Schnittansicht der Halterung, wobei ein Halter 1
auf ein vorzugsweise leistenförmig ausgebildetes Trägerelement 2 aufgesetzt wird. Der Halter 1ist lösbar an dem
leistenförmigen Trägerelement 2 befestigt, zu welchem Zweck
der Halter 1 seitliche Schenkel 1a und 1b aufweist, die
das Trägerelement 2 klemmend umfassen und nahe ihrer unteren
Kante auf der dem Trägerelement 2 zugewandten Fläche einen
in Längsrichtung verlaufenden Rastvorsprung 3a bzw. 3b
tragen, der in Querschnittsansicht gesehen dreieckförmig (Fig. 1) oder halbkreisförmig ausgebildet ist. Der
Abstand der Rastvorsprünge 3a, 3b gegenüber einem die
beiden Schenkel 1a, 1b miteinander verbindenden Verbindungssteg 1c entspricht der Höhe des aufzunehmenden Trägerelements 2. Wenn der Halter 1 auf das Trägerelement 2 aufgesetzt ist, umfassen somit die Rastvorsprünge 3a, 3b
das Trägerelement 2 an dessen Unterkanten und pressen das
Trägerelement 2 gegen den Verbindungssteg 1c.

Aus der Schnittansicht gemäß Fig. 2 ist erkennbar, daß der
Halter 1 an seiner Oberseite als integral zum Verbindungssteg 1c ausgebildete Teile zwei Haltelaschen 4a und 4b
aufweist, die gegenüber dem Verbindungssteg 1c geneigt angeordnet sind und zwar von der Seitenkante des Verbindungsstegs schräg nach oben weg von dem Verbindungssteg verlaufen . Vorzugsweise können die Haltelaschen 4a und 4b
einen Winkel von etwa 60$^o$ gegenüber dem Verbindungssteg 1c
einhalten und durch Versteifungsrippen 5a, 5c zusätzlich
mit dem Verbindungssteg 1c verbunden sein. Nach den Fig. 1
bis 3 weist jeder Halter 1 nur eine Versteifungsrippe 5a
bzw. 5b für eine Haltelasche 4a bzw. 4b auf, jedoch können
im Bedarfsfall auch mehrere, derartige Versteifungsrippen
vorgesehen werden. Die Versteifungsrippen 5a, 5b, die über

etwa ein Drittel der Länge des unteren Schenkelteils der Haltelaschen 4a, 4b angesetzt sind, verhindern eine zu hohe Elastizität der Haltelaschen 4a, 4b und gewährleisten vielmehr, daß
eine hohe Elastizität und eine damit verbundene Bewegung der
Haltelaschen 4a, 4b in Richtung auf den Verbindungssteg 1c und
vom Verbindungssteg 1c weg zu dem Zweck verhindert wird, daß
nach Einsetzen eines Rohres 6 dieses fest am Halter fixiert
und gehaltert wird. Die Ausbildung der Haltelaschen 4a, 4b
und des Verbindungssteges 1c zur Befestigung von Rohren von
Fußbodenheizungen bei der Verlegung von Fußbodenheizungssystemen wird im folgenden noch näher erläutert.

Unter Bezugnahme auf die Fig. 1 bis 5 wird im folgenden die
Funktion der erfindungsgemäßen Halterung näher beschrieben.
Wie bereits erläutert, sitzt jeder Halter 1 nach Aufschieben
auf sein zugeordnetes Trägerelement 2 fest auf dem Trägerelement 2, wobei die Schenkel 1a, 1b mit ihren Rastvorsprüngen 3a, 3b das Trägerelement 2 fest untergreifen. Die Rastvorsprünge 3a, 3b verlaufen praktisch in Längsrichtung zum
Trägerelement 2 und liegen in einer Ebene, die parallel ist
zur Ebene des Trägerelements 2, wie ohne weiteres aus Fig. 1
erkennbar ist. Das Trägerelement 2 weist in konstantem Abstand
zueinander oder in variierendem Abstand zueinander vorgesehene, durchgehende Öffnungen 7 auf, die vorzugsweise kreisförmig ausgebildet sind und deren Innendurchmesser bei kreisförmiger Ausbildung dem Außendurchmesser eines Zapfens 8
entspricht, der an der Unterseite des Verbindungssteges 1c
jedes Halters vorgesehen ist.

Vor dem Aufsetzen jedes Halters 1 wird der Halter 1 derart
gegenüber dem Trägerelement 2 ausgerichtet, daß sein
Zapfen 8 über einer der Öffnungen 7 zu liegen kommt und
nach dem Aufschieben des Halters 1 auf das Trägerelement 2
in die vorher ausgewählte Öffnung 7 eingeschoben wird.
Obgleich die Öffnungen 7 nicht durch die Höhe des Trägerelements 2 durchgehend ausgebildet sein müssen, wird jedoch die in Fig. 1 gezeigte Ausgestaltung bevorzugt, um Schwierigkeiten zu vermeiden, die sich ergeben könnten, wenn die Öffnungen 7 nur über eine bestimmte Tiefe bzw. Höhe des Trägerelements 2 vorgesehen sind und Fertigungstoleranzen bezüglich der Höhe des Zapfens 8 und/oder der Höhe der Öffnung 7 einerseits und Schmutzablagerungen in den Öffnungen andererseits ein vollständiges Einschieben des Zapfens 8 in die zugehörige Öffnung 7 verhindern oder erschweren.

Die Ausbildung der Zapfen 8 auf der Unterseite des Verbindungssteges 1c des Halters in Verbindung mit den Öffnungen 7 ermöglicht es, die Halter 1 an bestimmten, den Öffnungen 7 entsprechenden Positionen auf dem Trägerelement 2 aufzusetzen, wonach die Halter 1 in Längsrichtung des Trägerelements 2 unverschiebbar angeordnet sind, jedoch mit vergleichbar geringen Kräften vom Trägerelement 2 wieder entfernbar sind, falls ihre vorher vorgenommene Positionierung aus irgendwelchen Gründen verändert werden muß. Die Schenkel 1a, 1b müssen gegenüber dem Trägerelement 2 daher keine so hohe Klemmkraft ausüben, daß eine Verschiebung des Halters 1 gegenüber dem Trägerelement 2 verhindert wird. Die Rastvorsprünge 3a, 3b haben ausschließlich die Funktion, den Halter 1 nach seinem Aufsetzen auf das Trägerelement 2 an diesem gegenüber einem Abziehen nach oben einigermaßen fest zu halten, während eine Verschiebung des Halters 1 entlang des Trägerelements 2 ausschließlich durch den Zapfen 8 und eine der Öffnungen 7 verhindert wird. Dadurch läßt sich die Klemmkraft der Schenkel 1a, 1b vergleichbar niedrig konzipieren, was die Montage und Demontage der Halter 1 gegenüber dem Trägerelement 2 mit wesentlich geringeren Kräften wie bisher ermöglicht.

Die Abstände zwischen den Öffnungen 7 können so klein gewählt werden, daß jede Verlegungsart der Rohre 6 in einem Raum möglich ist, also eine Verlegung der Rohre in kleinen oder größeren Abständen zueinander möglich ist.

Zur Halterung der Rohre 6 dienen die Haltelaschen 4a, 4b, die
an ihrem oberen und freien Ende einen solchen Abstand zueinander einhalten, daß die Rohre in die durch die Haltelaschen
4a, 4b gebildete Aufnahme hineingedrückt werden können. Die
Haltelaschen 4a, 4b müssen eine solche Steifigkeit haben, daß
die Rohre 6 nach ihrem Einschieben in die durch die Haltelaschen gebildete Aufnahme Klemmkräften ausgesetzt sind,
die durch die Haltelaschen erzeugt werden und auf das Rohr
wirken, so daß das Rohr 6 klemmend von den Haltelaschen 4a, 4b
gegen eine Verdrehung und/oder eine Verlagerung nach oben
aus der Aufnahme heraus gehalten wird. Die von den Haltelaschen 4a, 4b auf das Rohr 6 ausgeübte Klemm- und Haltekraft
soll vorzugsweise derart groß gewählt sein, daß die Rohre 6
aus der Aufnahme heraus verlagert werden können, falls dies
bei der Verlegung nochmals erforderlich sein sollte. Außerdem ist die Felxibilität der Haltelaschen 4a, 4b derart
zu konzipieren, daß eine Entfernung des Rohres 6 aus der
durch die Haltelaschen gebildeten Aufnahme möglich wird, ohne
daß die Haltelaschen brechen oder von ihrem als Fußabschnitt
dienenden Verbindungssteg abgerissen werden.

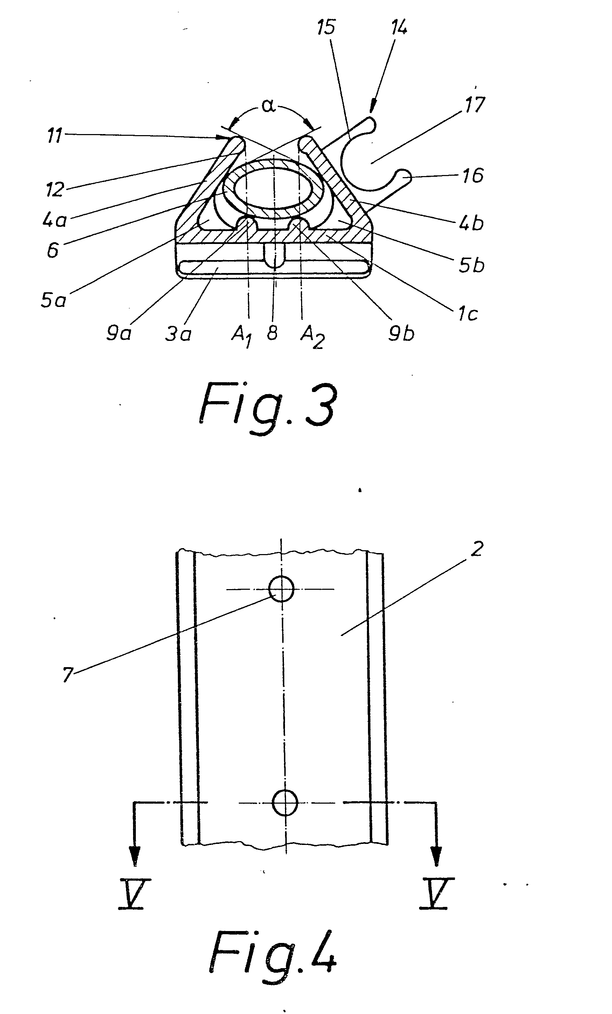

Die erfindungsgemäße Halterung eignet sich besonders vorteilhaft zur Aufnahme von ovalen Rohren, ist jedoch nicht
ausschließlich auf ovale Rohre begrenzt. Die Fig. 2 und 3
zeigen die Halterung mit einem eingesetzten ovalen Rohr 6,
das so von der Halterurg aufgenommen werden kann, daß seine
größere Achse quer zur Ebene des Trägerelements 2 steht
(Fig. 2) oder parallel zur Ebene des Trägerelements 2 liegt
(Fig. 3).

Nach einer weiteren Ausgestaltung der Erfindung können die
Halter 1 - vorzugsweise zum Zwecke der Aufnahme von ovalen
Rohren 6 - mit Längsrippen 9a, 9b versehen sein. Für die
Lagerung von ovalen Rohren werden vorteilhafterweise zwei solche,
Abstand zueinander einhaltende Längsrippen 9a, 9b vorgesehen, die als integrale Teile an der oberen Fläche des Verbindungsstegs 1c ausgebildet sind. Die Längsrippen 9a, 9b können
dreieckförmigen Querschnitt oder halbkreisförmigen Querschnitt (Fig. 2, 3) haben und sollen vorzugsweise einen
Abstand zueinander einhalten, der etwa dem Innendurchmesser
des einzusetzenden ovalen Rohres entsprechend seiner kleinen
Achse ist. In Fig. 2 ist eine Ausführungsform der Halterung
dargestellt, deren Scheitelabstand zwischen den beiden Linien
$A_1$ und $A_2$ etwa gleich dem Rohr-Innendurchmesser auf der kleinen Rohrachse ist. Auf diese Weise kann das stehende ovale
Rohr 6 derart in den Halter 1 eingesetzt werden, daß ein
Scheitelpunkt 5' des Rohres in der Mitte zwischen den beiden
Längsrippen auf der Oberfläche des Verbindungsstegs 1c zu
liegen kommt und gleichzeitig ein Teil der Mantelfläche des
ovalen Rohres mit kleinem Krümmungsradius zwischen den beiden
Längsrippen 9a, 9b aufliegt. Die Höhe der Haltelaschen 4a, 4b
ist in Fig. 1 durch eine Linie B gezeigt und entspricht bei
stehendem Ovalrohr etwa dem Abstand des oberen Scheitelpunktes
5" an der Rohrinnenfläche zum Verbindungssteg 1c. Bei der in
Fig. 2 gezeigten Ausführungsform wird durch die Längsrippen
9a, 9b und zusätzlich durch die auf die Oberseite des Rohres
drückenden Haltelaschen 4a, 4b ein Drehen des Rohres 6 im Halter
verhindert. Bei der in Fig. 3 gezeigten Ausführungsform wird
das ovale Rohr 6 dadurch fest von den Haltelaschen 4a, 4b
umfaßt, daß infolge der Längsrippen 9a, 9b sich das ovale
Rohr 6 in einer gegenüber der Oberfläche des Verbindungssteges 1c angehobenen Lage befindet und somit die Klemmkraft
der Haltelaschen 4a, 4b auf das Rohr 6 größer ist als wenn
die Längsrippen 9a, 9b nicht vorhanden wären und das Rohr 6
auf der Oberfläche des Verbindungssteges direkt aufliegt.

Die Anordnung der Haltelaschen 4a, 4b wird vorzugsweise derart getroffen, daß deren freie Enden einen Abstand zueinander einhalten, welcher der Entfernung zwischen den Linien
$A_1$ und $A_2$ in Fig. 2, d.h. dem Innendurchmesser des ovalen
Rohres 6 über seine kleinere Achse entspricht.

- 10 -

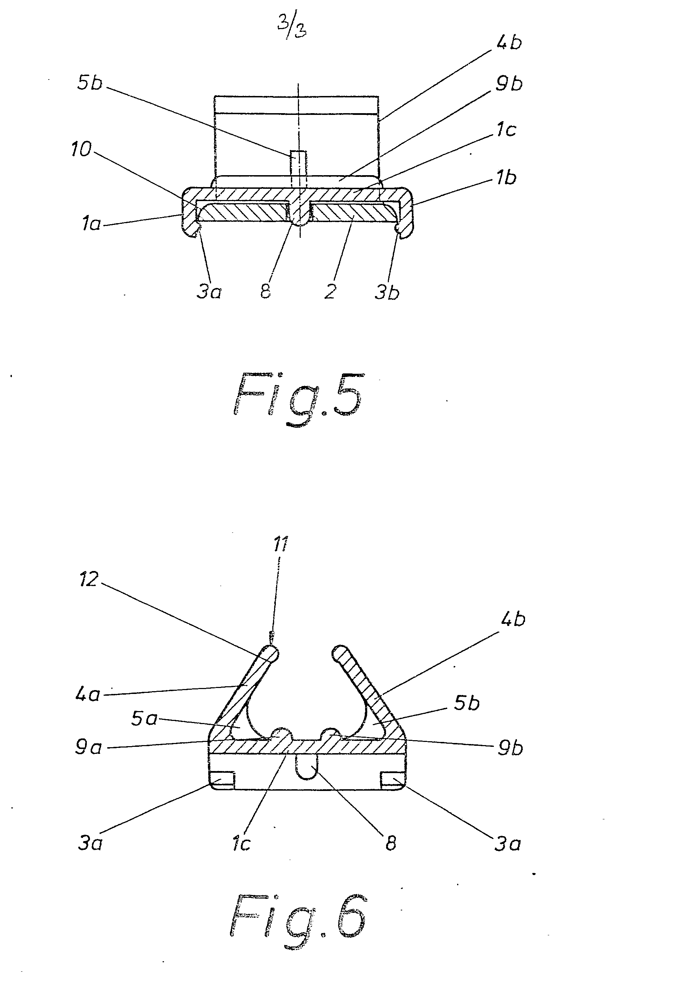

Die Anordnung der Haltelaschen 4a, 4b zur Erzeugung
von Klemm- bzw. Haltekräften auf das Rohr 6 ist derart zu
konzipieren, daß etwaige Herstellungstoleranzen des
Halters 1 selbst so weit kompensierbar sind, daß ausreichende Haltekräfte auf das Rohr 6 ausgeübt werden.
Das Trägerelement 2 kann beispielsweise an seinen
oberen Seitenkanten abgerundet sein, wie in Fig. 5 bei 10
gezeigt ist, wodurch ein leichteres Aufschieben der
Halter 1 auf das Trägerelement 2 möglich ist, da die
Schenkel 1a, 1b infolge des zwischen den Schenkeln und
dem Verbindungssteg einerseits und dem Trägerelement 2
bestehenden Leerraumes leichter nach unten gebogen
werden können, d.h. die Schenkel 1a, 1b flexibel über
das Trägerelement 2 gesetzt werden können. Dies trifft
besonders dann zu, wenn die Halter 1 aus Kunststoff
hergestellt sind.

Die Halterung, bestehend aus den Haltern 1 und dem Trägerelement kann wahlweise aus Metall oder Kunststoff hergestellt werden. Dabei ist es ohne weitere möglich, daß die
Trägerelemente 2 aus Metall gefertigt werden, während die
Halter 1 aus Kunststoff hergestellt werden. Selbstverständlich können auch beide Teile aus Kunststoff oder
Metall bestehen. Es bietet sich aus der Sicht der
Herstellungskosten und Korrosion des Materials allerdings
an, beide Teile aus Kunststoff herzustellen. Die Rastvorsprünge 3a, 3b werden dabei vorzugsweise in Form von Rippen
vorgesehen, die sich entlang der Innenfläche der Schenkel
1a, 1b nahe deren Unterkante erstrecken, wie beispielsweise Fig. 1 zeigt; anstelle von jeweils einem rippenartigen Rastvorsprung je Schenkel 1a, 1b lassen sich pro
Schenkel auch mehrere einzelne, punktförmige Rastvorsprünge
vorsehen, wie es in Fig. 6 durch die Bezugszeichen 3a
angedeutet ist.

Die Versteifungsrippen 5a, 5b, die den Haltelaschen 4a, 4b
eine bestimmte Steifigkeit verleihen, sind nach Fig. 2 und 3
in zur Ebene der Haltelaschen sowie des Verbindungssteges 1c
senkrecht stehenden Ebenen angeordnet.

Um ein leichtes Einschieben des Rohres 6 in die durch die
beiden Haltelaschen 4a, 4b gebildete Ausnehmung zu ermöglichen, werden die Haltelaschen 4a, 4b im Bereich ihrer
freien Enden in Form einer teilzylindrischen Mantelfläche 11
ausgebildet, so daß entlang der freien Enden der Haltelaschen
eine abgerundete, wulstähnliche Fläche definiert ist, so daß
gegenüber dem einzusetzenden Ovalrohr ein sehr stumpfer
Winkel $\alpha$ durch die entsprechenden Tangentiallinien seitens
der Mantelfläche 11 hervorgerufen wird. Beim Einschieben des
vorteilhafterweise stehenden ovalen Rohres 6 in die Ausnehmung zwischen den beiden Haltelaschen 4a, 4b wird infolge
der abgerundeten Form der Mantelfläche 11 ein Hochdrücken der
beiden Haltelaschen 4a und 4b durch das Rohr 6 und somit ein
geringfügiges Verschwenken der beiden Haltelaschen nach außen
ermöglicht, wodurch der Abstand zwischen den freien Enden
der beiden Haltelaschen vergrößert wird und das stehende,
ovale Rohr in die Ausnehmung hineingeschoben werden kann.
Sobald das Rohr 6 in die Ausnehmung hineingeschoben ist
und in seiner stehenden Lage verbleibt, drücken die Haltelaschen 4a, 4b auf das Rohr 6, wie in Fig. 1 gezeigt ist.
Bei entsprechender Ausgestaltung der Mantelflächen 11 kann
erreicht werden, daß nur die Mantelflächen 11, d.h. die
freien Enden der Haltelaschen 4a, 4b auf die Außenwand des
Rohres 6 drücken, während die nach unten verlaufenden Innenflächen der Haltelaschen 4a, 4b keinen Kontakt mit der Außenwand des Rohres 6 haben. Dies kann vorzugsweise dadurch erreicht werden, daß sich an die etwa zylindrische oder kreisförmige Mantelfläche 11 die Unterschneidung 12 anschließt,
die in Längsrichtung an der Innenfläche der Haltelaschen
4a, 4b ausgeprägt ist.

Nach einer weiter abgewandelten Ausführungsform der erfindungsgemäßen Halterung ist vorgesehen, daß an der Außenfläche 13 wenigstens einer der beiden Haltelaschen 4a, 4b eine Klemmeinrichtung 14 angeordnet ist, die aus dem gleichen Material wie der Halter 1 bestehen kann und vorzugsweise ein integrales Teil zum Halter 1 darstellt. Die Klemmeinrichtung 14 wird zur Aufnahme von Leerrohren oder dergleichen benutzt, die zur Aufnahme von elektrischen Leitungen oder dergleichen dienen und gleichzeitig mit dem Einbau der Rohre 6 auf dem Fußboden verlegt werden. Die Klemmeinrichtung 14 kann zwei Arme 15, 16 aufweisen, die eine weitgehend kreisförmige Öffnung 17 festlegen, in welche ein Leerrohr eingesetzt werden kann.

Wie vorstehend erläutert ist, können der Halter 1 und das Trägerelement 2 aus jedem beliebigen Werkstoff hergestellt werden. Bei der Herstellung der Halter 1 und/oder dem Trägerelement 2 aus Kunststoff wird bevorzugt, den Halter 1 aus durchscheinendem Kunststoff herzustellen, während das Trägerelement 2 aus nicht durchscheinendem Material besteht. Auf diese Weise wird das aufsetzen des Halters 1 auf das Trägerelement 2 erleichtert, da erkennbar ist, wie der Halter 1 mit dem Zapfen 8 gegenüber dem Trägerelement 2 auszurichten ist, damit der Zapfen 8 des Halters 1 über einer der Öffnungen 7 zu liegen kommt. Nach dieser Ausrichtung läßt sich der Halter 1 einfach durch Ausübung einer geringen Kraft auf den Halter 1 auf das Trägerelement 2 aufsetzen.

Anspruch/Ansprüche Nr. 3,4,7,10,12, 13,14,15,23 24
gilt/gelten als aufgegeben

- 1 -

Patentansprüche

1. Halterung, insbesondere zur Verlegung und Befestigung von
Rohren von Fußbodenheizungen auf Fußböden, bestehend aus
mehreren, auf ihrer Oberseite ein Rohr aufnehmenden Haltern,
die an einem Trägerelement lösbar befestigt sind und sich
seitlich des Trägerelements erstreckende Schenkel aufweisen,
welche das Trägerelement klemmend umfassen,
d a d u r c h   g e k e n n z e i c h n e t ,
daß jeder Schenkel (1a, 1b) des Halters (1) auf seiner dem
Trägerelement (2) gegenüberliegenden Fläche mit in Längsrichtung zum Trägerelement (2) verlaufenden Rastvorsprüngen
(3a, 3b) versehen ist, die das Trägerelement (2) untergreifen und daß zwischen den beiden Schenkeln (1a, 1b)
ein in eine Öffnung (7) des Trägerelements (2) eingreifender Zapfen (8) vorgesehen ist.

2. Halterung nach Anspruch 1, dadurch gekennzeichnet, daß der
Halter (1) zwei schräg und aufeinander zu verlaufende Haltelaschen (4a, 4b) zur Aufnahme des Rohres (6) aufweist.

Anspruch/Ansprüche Nr. 3,4,7,10,12,13, 14,15,23,24 gilt/gelten als aufgegeben   -2.-

3. Halterung nach Anspruch 1 oder 2, dadurch gekennzeichnet, daß die beiden Haltelaschen (4a, 4b) an ihren freien Enden Abstand zueinander aufweisen.

4. Halterung nach einem der vorangehenden Ansprüche, dadurch gekennzeichnet, daß der Halter (1) einen Verbindungssteg (1c) zwischen den beiden Schenkeln (1a, 1b) aufweist.

5. Halterung nach einem der vorangehenden Ansprüche, dadurch gekennzeichnet, daß die Haltelaschen (4a, 4b) seitlich am Verbindungssteg (1c) angeordnet sind und jeweils einen Winkel von etwa 60° zum Verbindungssteg einhalten.

6. Halterung nach einem der Ansprüche 1 bis 5., dadurch gekennzeichnet, daß der Verbindungssteg (1c) auf seiner oberen, dem Rohr (6) zugewandten Fläche Abstand zueinander einhaltende und in Längsrichtung verlaufende Rippen (9a, 9b) trägt.

7. Halterung nach Anspruch 6, dadurch gekennzeichnet, daß der Verbindungssteg (1c) zwei Rippen (9a, 9b) aufweist.

8. Halterung nach wenigstens einem der vorangehenden Ansprüche, dadurch gekennzeichnet, daß zwischen den Haltelaschen (4a, 4b) und dem Verbindungssteg (1c) Versteifungsrippen (5a, 5b) vorgesehen sind.

9. Halterung nach wenigstens einem der vorangehenden Ansprüche, dadurch gekennzeichnet, daß die oberen Seitenkanten des Trägerelements (2) abgerundet sind.

10. Halterung nach wenigstens einem der vorangehenden Ansprüche, dadurch gekennzeichnet, daß der Abstand zwischen den beiden Längsrippen (9a, 9b) auf der Oberseite des Verbindungsstegs (1c) etwa dem Abstand der freien Enden der Haltelaschen (10a, 10b) entspricht.

- 3 -

11. Halterung nach wenigstens einem der vorangehenden Ansprüche, dadurch gekennzeichnet, daß das Trägerelement (2) mehrere konstanten oder variierenden Abstand zueinander einhaltende Öffnungen (7) aufweist, die durchgehend über die Höhe des Trägerelements (2) ausgebildet sind.

12. Halterung zur Aufnahme eines ovalen Rohres nach wenigstens einem der vorangehenden Ansprüche, dadurch gekennzeichnet, daß die größere Achse des ovalen Rohres (6) in einer Ebene liegt, die parallel zur Ebene des Trägerelements (2) ist.

13. Halterung zur Aufnahme eines ovalen Rohres nach wenigstens einem der Ansprüche 1 bis 11, dadurch gekennzeichnet, daß die größere Achse des ovalen Rohres (6) senkrecht zur Ebene des Trägerelements (2) steht.

14. Halterung nach einem der Ansprüche 12 oder 13, dadurch gekennzeichnet, daß der Abstand zwischen dem Scheitel der beiden Längsrippen (9a, 9b) etwa dem Innendurchmesser des ovalen Rohres auf dessen kleinerer Achse entspricht.

15. Halterung nach wenigstens einem der vorangehenden Ansprüche, dadurch gekennzeichnet, daß der Abstand zwischen den freien Enden der Haltelaschen (4a, 4b) etwa so groß wie der Scheitelabstand zwischen den Längsrippen (9a, 9b) gewählt ist.

16. Halterung nach wenigstens einem der vorangehenden Ansprüche, dadurch gekennzeichnet, daß die Halter (1) und/oder das Trägerelement (2) aus Kunststoff bestehen.

17. Halterung nach wenigstens einem der vorangehenden Ansprüche, dadurch gekennzeichnet, daß die Rastvorsprünge (3a, 3b) in Form von in Längsrichtung zu den Schenkeln (1a, 1b) verlaufenden Rippen vorgesehen sind.

-4-

18. Halterung nach wenigstens einem der vorangehenden Ansprüche, dadurch gekennzeichnet, daß die Versteifungsrippen (5a, 5b) zwischen den Haltelaschen (4a, 4b) und dem Verbindungssteg (1c) etwa senkrecht zu den Haltelaschen verlaufend vorgesehen sind.

19. Halterung nach wenigstens einem der vorangehenden Ansprüche, dadurch gekennzeichnet, daß die freien Enden der Haltelaschen (4a, 4b) eine teilzylindrische Mantelfläche (11) aufweisen.

20. Halterung nach Anspruch 19, dadurch gekennzeichnet, daß sich an die teilzylindrische Mantelfläche (11) eine Hinterschneidung (12) anschließt, die in Längsrichtung der Haltelaschen (4a, 4b) an deren Innenfläche verläuft.

21. Halterung nach wenigstens einem der vorangehenden Ansprüche, dadurch gekennzeichnet, daß an einer Außenfläche (13) wenigstens einer der Haltelaschen (4a, 4b) eine Klemmeinrichtung (14) vorgesehen ist.

22. Halterung nach Anspruch 21, dadurch gekennzeichnet, daß die Klemmeinrichtung (14) zwei armförmige Ansätze (15, 16) aufweist.

23. Halterung nach Anspruch 22, dadurch gekennzeichnet, daß die armförmigen Ansätze (15, 16) eine weitgehend kreisförmige Öffnung (17) festlegen.

24. Halterung nach wenigstens einem der vorangehenden Ansprüche, dadurch gekennzeichnet, daß die Halter (1) aus durchscheinendem Kunststoff hergestellt sind.

BAD ORIGINAL

0018597

1/3

**Fig.1**

**Fig.2**

0018597

Fig.3

Fig.4

0018597

Fig.5

Fig.6

| Europäisches Patentamt | EUROPÄISCHER RECHERCHENBERICHT | Nummer der Anmeldung |
|---|---|---|
| | | EP 80 10 2208.9 |

| EINSCHLÄGIGE DOKUMENTE | | | KLASSIFIKATION DER ANMELDUNG (Int.Cl.) |
|---|---|---|---|
| Kategorie | Kennzeichnung des Dokuments mit Angabe, soweit erforderlich, der maßgeblichen Teile | betrifft Anspruch | |
| | GB - A - 1 338 325 (CARR) <br> * Fig. 1, 2 * <br> -- | 1,2,5 | F 16 L 3/24 |
| | GB - A - 1 210 223 (C. TAYLOR) <br> * Fig. 1, 2 * <br> -- | 1 | |
| A | CH - A5 - 588 660 (DERIA-DESTRA) <br> * ganzes Dokument * <br> -- | | |
| A | GB - A - 1 301 516 (F.T. PRODUCTS) <br> * ganzes Dokument * <br> -- | | RECHERCHIERTE SACHGEBIETE (Int.Cl.) |
| A | DE - A - 1 906 133 (H. KLEINHUIS) <br> * ganzes Dokument * <br> ---- | | F 16 B 7/00 <br> F 16 L 3/00 |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 18-06-1980 | SCHLABBACH |

EPA form 1503.1 06.78

BAD ORIGINAL